# FASCICULE DE BREVET EUROPEEN

(11) **EP 0 570 261 B1**
(45) Date de publication et mention de la délivrance du brevet: **03.09.1997**
(21) Numéro de dépôt: 93401169.3
(22) Date de dépôt: 05.05.1993
(51) Int. Cl.: C10G 67/06

(54) **Procédé de captation de mercure et d'arsenic dans une coupe d'hydrocarbure**
Verfahren zur Beseitigung von Quecksilber und Arsen aus einem Kohlenwasserstoffschnitt
Process for the removal of mercury and arsenic from a hydrocarbon fraction

(30) Priorité: 11.05.1992 FR 9205770
(43) Date de publication de la demande: 18.11.1993
(73) Titulaire: INSTITUT FRANCAIS DU PETROLE, 92502 Rueil-Malmaison (FR)
(72) Inventeur: Sarrazin, Patrick, F-92500 Rueil Malmaison (FR); Boitiaux, Jean-Paul, F-78300 Poissy (FR); Barthel, Yves, F-78230 Le Pecq (FR); Cameron, Charles, F-75006 Paris (FR); Courty, Philippe, F-78800 Houilles (FR)

(56) Documents cités:
- EP-A- 0 385 742
- EP-A- 0 412 862
- WO-A-90/10684
- FR-A- 2 673 191
- US-A- 4 911 825

## Description

La présente invention concerne un procédé de captation de mercure et d'arsenic contenus dans une charge d'hydrocarbures, le mercure étant majoritairement sous forme élémentaire et/ou mercaptides. Le procédé est caractérisé en ce que la charge est mise au contact d'au moins une masse de captation M1 du mercure à une température T1, inférieure à 175 °C et que le produit obtenu est mis au contact d'une masse de captation (M2) d'arsenic en présence d'hydrogène à une température T2 supérieure ou égale à T1 et supérieure à 130 °C.

Le mercure et l'arsenic sont des polluants fréquemment présents dans les coupes d'hydrocarbures tels que les gaz de pétrole liquéfiés, les condensats associés au gaz naturel ou les naphtas. La valorisation de ces dernières dans divers procédés de raffinage et de pétrochimie présente l'inconvénient majeur d'entraîner la contamination des installations et des catalyseurs qui y sont utilisés. On peut par exemple citer le cas du vapocraquage où le traitement d'hydrocarbures pollués par le mercure et l'arsenic peut entraîner une corrosion des échangeurs à base d'alliage d'aluminium dans la section cryogénique des séparations et un empoisonnement des catalyseurs d'hydrogénation sélective des coupes oléfiniques produites.

Dans le domaine du raffinage du pétrole brut, des problèmes de contamination similaires, par exemple par de l'arsenic, peuvent être rencontrés et conduire à l'empoisonnement de catalyseurs d'hydrotraitement.

Un procédé antérieur est connu pour éliminer le mercure ou l'arsenic dans les hydrocarbures.

La demanderesse a décrit un procédé, US 4 911 825 permettant de capter le mercure et l'arsenic contenus dans un hydrocarbure. Ce procédé comporte le traitement en deux étapes successives sur des masses de nature différente opérant dans des conditions opératoires elles aussi différentes.

La masse de captation d'arsenic utilisé dans la première étape est constitué d'au moins un métal M choisi dans le groupe formé par le fer, le nickel, le cobalt et le palladium, utilisé tel quel ou de préférence déposé sur support. Le métal M doit se trouver sous forme réduite au moins pour 50 % de sa totalité. On utilise de préférence le nickel ou l'association du nickel avec le palladium.

La demanderesse a décrit également l'utilisation d'autres masses de captation d'arsenic lors de cette première étape dans les brevets EP A 412 862 et WO A 90/10684.

La masse de captation de mercure utilisée dans la deuxième étape renferme du soufre ou un sulfure de métal. Le procédé antérieur de captation de mercure et d'arsenic, décrite dans le brevet US 4 911 825 de la demanderesse, est mis en oeuvre de la façon suivante :
1) l'hydrogène est mélangé à la charge à purifier,
2) le mélange est chauffé à la température requise pour le premier réacteur, donc à une température entre 130 et 250 °C pour les masses décrites dans le brevet US 4 911 825 et entre 180 et 450 °C pour les masses décrites dans le brevet WO A 90/10684,
3) Le mélange est mis en contact avec la masse de captation d'arsenic dans le premier réacteur où tous les composés en arsenic sont convertis en arsine, (AsH₃) et tous les composés de mercure sont convertis en mercure élémentaire. L'arsenic est retenu par cette masse de captation mais le mercure n'est pas retenu.
4) L'effluent de ce premier réacteur, débarrassé d'arsenic, est refroidi à la température requise pour la deuxième étape, entre 0 et 175 °C.
5) Le mélange refroidi entre dans le deuxième réacteur où le mercure est retenu par une masse de captation de mercure.

Le procédé antérieur, décrit ci-dessus, est très efficace pour la captation de d'arsenic et de mercure présents sous différentes formes chimiques dans les charges d'hydrocarbures. La première étape permet de convertir les espèces organomercuriques, HgR₂ où R est un radical organique, en présence d'hydrogène en mercure élémentaire et 2HR. En effet, la conversion des organomercuriques en mercure élémentaire est une étape obligée pour la captation de mercure.

Ce procédé antérieur, néanmoins, est peu adapté pour les charges d'hydrocarbures contenant des teneurs très faibles de mercure sous forme organomercurique. Deux inconvénients principaux du procédé antérieur sont :
1) la nécessité de mélanger l'hydrogène avec la charge avant que le mercure soit capté, et
2) l'obligation de refroidir la charge d'hydrocarbures entre les deux étapes du procédé.

Il a été découvert que le mercure sous forme élémentaire et mercaptides peut de façon surprenante être capté en absence d'hydrogène. Le nouveau procédé, de la présente invention, permet l'utilisation des masses de captation de mercure en absence d'hydrogène, permet la captation d'arsenic et permet une réduction significative du montant de l'investissement par rapport au procédé antérieur.

La présente invention est un procédé de captation du mercure et d'arsenic contenus dans une charge d'hydrocarbure, le mercure étant sous forme élémentaire et/ou de mercaptides, caractérisé en ce que la charge est mise au contact d'au moins une masse de captation (M1) de mercure à une température (T1) inférieure à 175 °C et que le produit obtenu est mis au contact d'une masse de captation (M2) d'arsenic en présence d'hydrogène et à une température (T2) supérieure ou égale à T1 et supérieure à 130°C.

Les hydrocarbures à traiter peuvent être en phase gazeuse ou en phase liquide. Généralement, on préfère opérer en phase gazeuse pour les hydrocarbures ayant un nombre d'atomes de carbones inférieur à 5. Pour des coupes d'hydrocarbures liquides à température et pression normales, le procédé est mis en oeuvre en phase liquide, bien que l'on puisse opérer en phase mixte.

Les masses de captation (M1) de mercure qui sont utilisées dans la présente invention peuvent être identiques ou différentes des masses de captation (M2) d'arsenic. Quand les masses M1 sont différentes des masses M2, elles renferment du soufre, du sulfure de métal, du zinc ou de l'étain.

La masse de captation (M1) peut être constituée par du soufre ou un composé soufré déposé sur un support ou dispersant minéral solide choisi, par exemple, dans le groupe formé par l'alumine, les silice-alumines, la silice, les zéolithes, les argiles, les charbons actifs, les ciments alumineux.

On peut utiliser comme masse de captation du soufre déposé sur un support. On peut également utiliser un composé renfermant du soufre et un métal P où P est choisi dans le groupe formé par le cuivre, le fer, l'argent et, de façon préférée, par le cuivre ou l'association cuivre-argent. Au moins 50 % du métal P est employé sous forme de sulfure.

L'utilisation de l'étain dans la composition de la masse de captation (M1) est préférentiellement sous forme de SnCl₂ déposé sur un support ou dispersant minéral solide choisi, par exemple, dans le groupe formé par l'alumine, les silice-alumines, la silice, les zéolithes, les argiles, les charbons actifs et les ciments alumineux. On peut citer comme exemple le SnCl₂ sur charbon préparé selon la méthode indiqué dans les brevets US 5 062 948 et EP A 433 677.

Pour les cas où la charge d'hydrocarbures à traiter contient des quantités importantes de mercaptans, il a été découvert avantageux de mettre en contact la charge avec une masse contenant au moins 25 % poids de zinc.

Par quantités importantes il est entendu que la charge contient au moins 50 ppm de mercaptans, de préférence au moins 75 ppm de mercaptans et avantageusement au moins 100 ppm de mercaptans.

Les masses contenant au moins 25 % pds de zinc, de préférence 35 % pds de zinc, peuvent contenir du zinc sous forme de zinc métallique, d'oxyde de zinc et/ou un composé de zinc capable de se décomposer thermiquement en oxyde zinc, tel que le carbonate de zinc ou encore d'hydroxycarbonate de zinc. Dans les cas où la charge d'hydrocarbures à traiter contient des quantités importantes de mercaptans, le zinc est avantageusement sous forme d'oxyde de zinc et/ou de carbonate de zinc et/ou d'hydroxycarbonate de zinc et très avantageusement sous forme d'hydroxycarbonate de zinc.

Les masses de captation (M2) d'arsenic qui peuvent être mises en oeuvre dans la présente invention sont celles décrites dans les brevets US 4 911 825 et WO A 90/10684 de la demanderesse.

Il y a deux cas de figure :
1) les masses de captation (M2) d'arsenic renfermant au moins un métal du groupe formé par le fer, le cobalt, le nickel et le palladium utilisé, de préférence, déposé sur un support et sous forme réduite au moins pour 50% de sa totalité, et
2) les masses de captation (M2) d'arsenic renfermant au moins un métal choisi dans le groupe formé par le nickel, le cobalt, le fer, le palladium et le platine, et au moins un métal choisi dans le groupe formé par le chrome, le molybdène, le tungstène et l'uranium, déposés sur un support.

Les supports utilisés pour ces masses de captation sont choisis dans le groupe formé par l'alumine, les silices-alumines, la silice, les zéolithes, le charbon actif, les argiles et les ciments alumineux.

Le support pourra être constitué avantageusement par une alumine en présence ou en absence d'un aluminate. Il présentera de préférence une grande surface et un volume poreux suffisant, c'est-à-dire respectivement au moins 50 m²/g et au moins 0,5 cm³/g, par exemple 50 à 350 m²/g et 0,5 à 1,2 cm³/g.

Quand un aluminate est présent dans la masse de captation M2, il est préférentiellement choisi parmi ceux d'au moins un métal du groupe : Mg, Ca, Sr, Ba, Mn, Fe, Co, Ni, Cu et Zn, comme décrit dans le brevet EP A 412 862 de la demanderesse.

Une telle masse M2 comprend 60 à 97% en poids d'un support poreux renfermant en poids de 40 à 98,5% d'alumine; de 1,5 à 60% d'oxyde d'au moins un métal A combiné avec l'alumine sous forme d'aluminate et choisi dans le groupe formé par Mg, Ca, Sr, Be, Mn, Fe, Co, Ni, Cu et Zn; ladite masse comprenant également de 3 à 40% en poids d'oxyde de nickel imprégné par échange ou par dépôt sur le support.

La masse M2 peut également être choisie dans le groupe constitué par les sulfures de nickel et de molybdène, les sulfures de nickel et de tungstène et les sulfures de cobalt et de molybdène.

La température d'opération T1 de la présente invention est inférieure à 175°C. Dans le cas où M1 renferme du nickel à l'état métallique, la température T1 est comprise entre 0 et 130°C.

La température d'opération T2 dans la présente invention peut aller de 130 à 450 °C, plus avantageusement de 180 à 390 °C.

Quand la charge contient des quantités importantes de mercaptans, une masse de captation (M1) à base de zinc peut être avantageusement utilisée. Cette masse à base de zinc peut soit remplacer une autre masse de captation (M1) de mercure, soit être intercalée entre une autre masse de captation (M1) et la masse de captation M2, soit être utilisée avant une autre masse de captation (M1) de mercure. La masse à base de zinc est située de préférence avant ou à la place d'une autre masse de captation M1.

La pression de mise en oeuvre de la présente invention peut être différente ou identique dans les deux réacteurs. De façon préférée les deux réacteurs opèrent à la même pression. Les pressions opératoires seront choisies de 1 à 90 bars, de préférence de 2 à 45 bars et plus particulièrement de 5 à 35 bars.
La vitesse spatiale calculée par rapport à chacune des masses de captation peut être de 1 à 50 h⁻¹ et plus particulièrement de 1 à 30 h⁻¹ (volumes-liquide-par volume de masse de captation et par heure).

Le débit d'hydrogène, rapporté à la masse de captation (M2) est compris par exemple entre 1 et 500 volumes (gaz aux conditions normales) par volume de masse M2 et par heure.

### EXEMPLES

Les tests de captation de mercure et d'arsenic selon la présente invention ont été effectués avec deux réacteurs en séries : le premier réacteur (R1) contenant la masse (M1) opère à une température (T1) et le deuxième réacteur (R2) contenant la masse (M2) opère à une température (T2). Tous les tests d'épuration ont été effectués à une pression de 25 bars, sauf dans le cas du réacteur R2 dans l'exemple 7. Les deux réacteurs en acier inoxydable de 3 cm de diamètre intérieur ont été chargés de 50 cm³ d'une masse de captation. Pour tous les exemples ci-après, les quantités de mercure et d'arsenic ont été mesurées dans la charge. Après 250 h de marche, les quantités de mercure et d'arsenic ont été déterminées dans les effluents du réacteur R1 et du réacteur R2.

### Exemple 1

La masse M1 utilisée dans cet exemple est composée de sulfure de cuivre supporté sur des billes d'alumine et a été préparée tel que décrit dans le brevet US 4 094 777 de la demanderesse.

Le produit qui a servi comme masse M2 est composé de nickel à l'état métallique supporté sur des billes d'alumine. La masse a été préparée et réduite selon la procédure décrite dans l'exemple 1 du brevet US 4 911 825 de la demanderesse.

Pour ce test, 300 l de naphta (point final d'ébullition 180 °C) ne contenant pas de quantités détectables de mercure, d'arsenic et de mercaptans ont servi pour la préparation de la charge. Trente litres de ce naphta ont été mis en contact avec 300 g de mercure métallique et le mélange a été agité dans un récipient métallique fermé pendant 72 h à température ambiante. Les 30 l de naphta ont été séparés du mercure non-solubilisé par décantation, puis mélangés avec les 270 l de naphta exempts de mercure. La concentration en mercure métallique dans cette charge est de 2260 ppb.

Le test a été effectué avec une vitesse volumétrique horaire liquide (VVH) de 8 h⁻¹ et une vitesse volumétrique horaire gazeuse (VVHG) de 44 h⁻¹. Les températures T1 et T2 sont de 22 et 170 °C respectivement. L'hydrogène a été mélangé à la charge après le réacteur R1. Après 250 h, les concentrations de mercure à la sortie des réacteurs R1 et R2 étaient de 45 et 45 ppb respectivement indiquant une efficacité de démercurisation de 98 %.

### Exemple 2

L'exemple 2 a été conduit en utilisant les mêmes conditions que celles décrites dans l'exemple 1 sauf que la masse M2 était absente (et le débit d'hydrogène supprimé). De plus, des pastilles d'oxyde de zinc (épaisseur = 5 mm, diamètre = 11 mm), commercialisées par la société Grande Paroisse, ont été coupées en quatre et utilisées dans un réacteur R1' avant le réacteur R1 contenant la masse M1. Les réacteurs R1 et R1' opèrent dans les mêmes conditions opératoires et contiennent le même volume de catalyseur.

Après 250 h de test, les concentrations de mercure après les réacteurs R1' et R1 étaient de 2253 et 41 ppb respectivement. L'efficacité de captation du mercure est de 98,2 %.

### Exemple 3

La masse composée de nickel à l'état métallique, précédemment décrite dans l'exemple 1, a servi comme masse M1 et M2. Les températures respectives T1 et T2 ont été ajustées à 22 et 170 °C. Les conditions et la charge décrites dans l'exemple 1 sont identiques pour ce test. Les quantités de mercure trouvées après 250 h de test étaient de 294 ppb après R1 et 288 ppb après R2. L'efficacité de captation de mercure est de 87,2 %.

### Exemple 4

Un naphta exempt de mercure et contenant 240 ppm de mercaptans et 66 ppb d'arsenic a été utilisé pour la préparation de la charge. Douze litres de ce naphta ont été mélangés avec 160 g de mercure métallique et le mélange agité pendant 72 h à température ambiante. Le naphta a été ensuite séparé du mercure en excès, puis mélangé avec 388 l de naphta exempt de mercure pour l'obtention de 400 l d'une charge ayant une concentration en mercure de 2440 ppb. Cette charge a été utilisée dans les exemples 4 à 7.

Les masses M1 et M2 ainsi que les conditions opératoires utilisées dans ce test étaient identiques à celles indiquées dans l'exemple 1. Après 250 h de test, les concentrations de mercure et d'arsenic à la sortie des réacteurs R1 et R2 étaient les suivantes : R1 : 40 ppb (Hg), 62 ppb (As) ; R2 : 35 ppb (Hg), 36 ppb (As). Les efficacités de captation de mercure et d'arsenic sont de 98,6 et 45,5 % respectivement.

### Exemple 5

L'oxyde de zinc (M1) et la masse composée de nickel métallique (M2) ont été employés à 20 (T1) et 210 °C (T2). La charge décrite dans l'exemple 4 a été utilisée. Toutes les autres conditions pour ce test étaient identiques à celles de l'exemple 1. Les résultats après 250 h de fonctionnement étaient : R1 : 928 ppb (Hg), 64 ppb (As), R2 : 920 ppb (Hg), 12 ppb (As), 242 ppm (S). Les efficacités de captation de mercure et d'arsenic sont de 62,3 et 81,8 % respectivement.

### Exemple 6

La charge contenant 2440 ppb de mercure, décrite dans l'exemple 4, a été épurée en utilisant dans les réacteurs R1 et R2, la masse composée de nickel à l'état métallique. Les températures T1 et T2 ont été fixées à 22 et 210 °C respectivement. Après 250 h de test, les concentrations trouvées après les réacteurs R1 et R2 ont été: R1 : 73 ppb (Hg), 62 ppb (As) ; R2 : 47 ppb (Hg), < 5 ppb (As). Les efficacités de captation de mercure et d'arsenic sont de 97,3 et > 92,4 % respectivement.

### Exemple 7

Ce test de captation de mercure et d'arsenic a été effectué en utilisant la même charge que dans l'exemple précédent. La masse M1 dans le réacteur R1 était identique à celle contenant du sulfure de cuivre décrite dans l'exemple 1.

Cette masse a opéré à 22 °C durant tout le test. L'hydrogène (dans un rapport débit gazeux d'hydrogène sur VVH de 6) a été ajouté à l'effluent liquide à température ambiante sous une pression totale de 50 bars, puis mis en contact avec la masse M2 à une température T2 de 340 °C. La masse M2 utilisée dans cet exemple est le catalyseur HMC 841 commercialisé par la société Procatalyse. Ce catalyseur est constitué de billes d'alumine contenant du nickel et du molybdène. Le catalyseur a été présulfuré avant chargement selon le procédé Sulficat (R) commercialisé par la société Eurecat. Les résultats d'analyse obtenus après 250 h à la sortie des réacteurs R1 et R2 étaient : R1 : 39 ppb (Hg), 64 ppb (As) ; R2 : 39 ppb (Hg), < 5 ppb (As). Les efficacités de captation de mercure et d'arsenic sont de 98,4 et > 92,4 % respectivement.

### Exemples 8-10

Les exemples 8 à 11, décrits ici, sont donnés à titre comparatif. Bien que l'on puisse capter une quantité limitée de mercure contenu dans la charge, la teneur de mercure à la sortie du réacteur 2 est trop importante pour permettre une bonne efficacité de captation.

### Exemple 8

Un condensat contenant 2040 ppb de mercure (dont seul 240 ppb sont sous forme de mercure métallique), 56 ppb d'arsenic et 123 ppb de mercaptans a été utilisé comme charge dans les exemples 8 à 11. Les masses M1 et M2 utilisées dans cet exemple aussi bien que les conditions opératoires sont identiques à celles indiquées dans l'exemple 1, à l'exception de la température T2 qui a été fixée à 210 °C. Après 250 h de test, les résultats suivants ont été obtenus en sortie des réacteurs R1 et R2 : R1 : 1811 ppb (Hg), 52 ppb (As) ; R2 : 1808 ppb (Hg), 11 ppb (As). Les taux d'épuration de mercure et d'arsenic trouvés sont de 11,4 et 80,4 % respectivement.

### Exemple 9

La masse d'oxyde de zinc a été employée comme masse M1 à 20 °C, en conservant toutes les autres conditions identiques à celles de l'exemple précédent. Les résultats de captation de mercure et d'arsenic après 250 h étaient : R1 : 1923 ppb (Hg), 54 ppb (As) ; R2 : 1923 ppb (Hg), 7 ppb (As). Les efficacités de captation obtenues sont : 5, 7 % (Hg) et 87,5 % (As).

### Exemple 10

Cet exemple a été effectué en chauffant la masse (M1) d'oxyde de zinc à une température (T1) de 120 °C. Les autres conditions du test ont été identiques à celles décrites dans l'exemple 9. Après 250 h de test, on a obtenu les résultats suivants : R1 : 1891 (Hg), 49 ppb (As) ; R2 : 1888 (Hg), 6 ppb (As). Ces résultats correspondent à 7,5 % et 90,9 % d'efficacité de captation de mercure et d'arsenic respectivement.

### Exemple 11

L'épuration de la charge décrite dans l'exemple 8 a été mise en oeuvre en utilisant les masses M1 et M2, les températures T1 et T2 et le rapport de débit gazeux volumique horaire d'hydrogène par rapport à la VVH liquide (5,5) identiques à ceux de l'exemple 6. En sortie des réacteurs R1 et R2 les concentrations suivantes de mercure et d'arsenic ont été obtenues après 250 h : R1 : 1798 ppb (Hg), 43 ppb (As) ; R2 : 1787 ppb (Hg), < 5 ppb (As). Les efficacités de captation sont de 13,9 % (Hg) et > 92,4 % (As).

## Revendications

1. Procédé de captation du mercure et de l'arsenic contenus dans une charge d'hydrocarbures, le mercure étant sous forme élémentaire et/ou de mercaptides, procédé caractérisé en ce que la charge est mise au contact d'au moins une masse de captation M1 du mercure à une température T1 inférieure à 175 °C et que le produit obtenu est mis au contact d'une masse de captation M2 de l'arsenic, en présence d'hydrogène et à une température T2 supérieure ou égale à T1 et supérieure à 130 °C, le procédé opérant à des pressions comprises entre 1 et 90 bars.

2. Procédé selon la revendication 1, caractérisé en ce que la charge qui contient des mercaptides de mercure et/ou des mercaptans est mise au contact d'une masse de captation M1 du mercure contenu dans ladite charge, ladite masse contenant de l'oxyde de zinc ou un composé de zinc capable de se décomposer thermiquement en oxyde de zinc, ladite mise au contact étant effectuée avant la mise en contact avec la masse de captation de l'arsenic.

3. Procédé selon l'une des revendications 1 ou 2, caractérisé en ce que la masse de captation M1 du mercure élémentaire renferme au moins un composé choisi parmi le groupe constitué par le soufre, le zinc métallique, le palladium, le chlorure d'étain, un sulfure de cuivre, un sulfure de fer, le sulfure d'argent, le sulfure de zinc.

4. Procédé selon l'une des revendications 1 ou 2, caractérisé en ce que la masse de captation M1 du mercure élémentaire renferme du nickel à l'état métallique et en ce que la température de mise en contact de la charge avec ladite masse est comprise entre 0 et 130 °C.

5. Procédé selon l'une des revendications 1 à 4, caractérisé en ce que la masse M2 de captation de l'arsenic comprend 60 à 97 % en poids d'un support poreux renfermant en poids de 40 à 98,5 % alumine ; de 1,5 à 60 % d'oxyde d'au moins un métal A combiné avec l'alumine sous forme d'aluminate et choisi dans le groupe formé par Mg, Ca, Sr, Be, Mn, Fe, Co, Ni, Cu et Zn ; ladite masse comprenant également de 3 à 40 % en poids d'oxyde de nickel imprégné par échange ou par dépôt sur le support.

6. Procédé selon l'une des revendications 1 à 4, caractérisé en ce que la masse M2 de captation de l'arsenic renferme du nickel à l'état métallique.

7. Procédé selon l'une des revendications précédentes, caractérisé en ce que la masse M2 de captation de l'arsenic renferme au moins un élément choisi dans le groupe formé par nickel, cobalt, fer, palladium et platine, et au moins un élément choisi dans le groupe formé par chrome, molybdène, tungstène et uranium.

8. Procédé selon la revendication 7, caractérisé en ce que ladite masse M2 est choisie dans le groupe constitué par les sulfures de nickel et de molybdène, les sulfures de cobalt et de molybdène et les sulfures de nickel et de tungstène.

## Patentansprüche

1. Verfahren zur Abscheidung von Quecksilber und Arsen, welche in einer Kohlenwasserstoffcharge enthalten sind, wobei das Quecksilber in elementarer Form und/oder in Form von Mercaptiden vorliegt, und das verfahren dadurch gekennzeichnet ist, daß die Charge mit wenigstens einer Abscheidungsmasse M1 für Quecksilber bei einer Temperatur T1 von unter 175°C in Kontakt gebracht wird, und daß das erhaltene Produkt mit einer Abscheidungsmasse M2 für Arsen in Gegenwart von Wasserstoff und bei einer Temperatur T2 von über oder gleich T1 und über 180°C in Kontakt gebracht wird, wobei das Verfahren bei Drucken, welche zwischen 1 und 90 bar enthalten sind, arbeitet.

2. Verfahren nach Anspruch 1, dadurch gekennzeichnet, daß die Charge, welche Quecksilbermercaptide und/oder -mercaptane enthält, mit einer Abscheidungsmasse M1 für Quecksilber, das in der Charge enthalten ist, in Kontakt gebracht wird, wobei die Masse Zinkoxid oder eine Zinkverbindung enthält, welche sich thermisch zu Zinkoxid abbauen kann, enthält, wobei das in Kontakt bringen vor dem in Kontakt bringen mit der Abscheidungsmasse für Arsen durchgeführt wird.

3. Verfahren nach einem der Ansprüche 1 oder 2, dadurch gekennzeichnet, daß die Abscheidungsmasse M1 für elementares Quecksilber wenigstens eine Verbindung umfaßt, welche aus der Gruppe ausgewählt ist, die aus Schwefel, metallischem Zink, Palladium, Zinnchlorid, einem Kupfersulfid, einem Eisensulfid, dem Silbersulfid, dem Zinksulfid ausgewählt ist.

4. Verfahren nach einem der Ansprüche 1 oder 2, dadurch gekennzeichnet, daß die Abscheidungsmasse M1 für elementares Quecksilber Nickel im metallischen Zustand umfaßt und dadurch, daß die Temperatur beim in Kontakt bringen der Charge mit der Masse zwischen 0 und 130°C enthalten ist.

5. Verfahren nach einem der Ansprüche 1 bis 4, dadurch gekennzeichnet, daß die Abscheidungsmasse M2 für Arsen 60 bis 97 Gew.% eines porösen Trägers umfaßt, der 40 bis 98,5 Gew.% Aluminiumoxid, 1,5 bis 60 Gew.% eines Oxides wenigstens eines mit dem Aluminiumoxid kombinierten Metalles A in Form von Aluminat und ausgewählt aus der Gruppe, die durch Mg, Ca, Sr, Be, Mn, Fe, Co, Ni, Cu und Zn gebildet ist, umfaßt, wobei die Masse ebenso 3 bis 40 Gew.% Nickeloxid umfaßt, daß durch Austausch oder durch Abscheidung auf dem Träger imprägniert ist.

6. Verfahren nach einem der Ansprüche 1 bis 4, dadurch gekennzeichnet, daß die Abscheidungsmasse M2 für Arsen Nickel im metallischen Zustand umfaßt.

7. Verfahren nach einem der vorhergehenden Ansprüche, dadurch gekennzeichnet, daß die Abscheidungsmasse M2 für Arsen wenigstens ein Element umfaßt, das aus der Gruppe ausgewählt ist, die durch Nickel, Cobalt, Eisen, Palladium und Platin gebildet ist, und wenigstens ein Element das aus der Gruppe ausgewählt ist, die durch Chrom, Molybdän, Wolfram und Uran gebildet ist.

8. Verfahren nach Anspruch 7, dadurch gekennzeichnet, daß die Masse M2 aus der Gruppe ausgewählt ist, die aus den Sulfiden von Nickel und Molybdän, den Sulfiden von Cobalt und Molybdän und den Sulfiden von Nickel und Wolfram gebildet ist.

## Claims

1. A process for the recovery of mercury and arsenic contained in a hydrocarbon charge, the mercury being in elementary form and/or of mercaptides, the process being characterised in that the charge is placed in contact with at least one recovery mass M1 for mercury at a temperature T1 which is less than 175°C, and that the product obtained is placed in contact with a recovery mass M2 for arsenic, in the presence of hydrogen, and at a temperature T2 which is greater than or equal to T1 and greater than 130°C, the process being carried out at pressures of between 1 and 90 bars.

2. A process according to Claim 1, characterised in that the charge containing the mercaptides of mercury and/or mercaptans is placed in contact with a recovery mass M1 for mercury contained in said charge, said mass containing zinc oxide or a zinc compound capable of thermal decomposition in zinc oxide, said contacting operation being carried out prior to contacting with the recovery mass for arsenic.

3. A process according to one of Claims 1 or 2, characterised in that the recovery mass M1 for the elementary mercury contains at least one compound selected from the group constituted of sulphur, metallic zinc, palladium. tin chloride, a copper sulphide, an iron sulphide, silver sulphide, zinc sulphide.

4. A process according to one of Claims 1 or 2, characterised in that the recovery mass M1 for the elementary mercury contains nickel in the metallic state and that the temperature at which the charge is placed in contact with said mass is between 0 and 130°C.

5. A process according to one of Claims 1 to 4, characterised in that the recovery mass M2 for the arsenic contains 60 to 97% by weight of a porous support containing, by weight, from 40 to 98.5% alumina; from 1.5 to 60% oxide of at least one metal A combined with alumina in aluminate form, and selected from the group formed by Mg, Ca, Sr, Be, Mn, Fe, Co, Ni, Cu and Zn; said mass also comprising 3 to 40% by weight of nickel oxide impregnated by exchange or deposit on the support.

6. A process according to one of Claims 1 to 4, characterised in that the recovery mass M2 for arsenic contains nickel in metallic state.

7. A process according to one of the preceding claims, characterised in that the recovery mass M2 for arsenic contains at least one element selected from the group formed by nickel, cobalt, iron, palladium and platinum, and at least one element selected from the group formed by chromium, molybdenum, tungsten and uranium.

8. A process according to Claim 7, characterised in that said mass M2 is selected from the group constituted of nickel and molybdenum sulphides, cobalt and molybdenum sulphides and nickel and tungsten sulphides.
